# EUROPÄISCHE PATENTSCHRIFT

(11) **EP 1 983 106 B1**
(45) Veröffentlichungstag und Bekanntmachung des Hinweises auf die Patenterteilung: **10.02.2016**
(21) Anmeldenummer: 08154152.6
(22) Anmeldetag: 07.04.2008
(51) Int. Cl.: E01C 23/088, E01C 21/00, B62D 33/063

(54) **Selbstfahrende Baumaschine**
Self-propelled construction vehicle
Engin de travaux publics automoteur

(30) Priorität: 19.04.2007 DE 202007005756 U
(43) Veröffentlichungstag der Anmeldung: 22.10.2008
(73) Patentinhaber: Wirtgen GmbH, 53578 Windhagen (DE)
(72) Erfinder: Berning, Christian, 53909, Zülpich (DE); Kramer, Thomas, 53639, Köngiswinter (DE); Simons, Dieter, 53567, Buchholz/Ww. (DE); Hähn, Günter, 53639, Königswinter (DE)
(74) Vertreter: von Kreisler Selting Werner - Partnerschaft von Patentanwälten und Rechtsanwälten mbB

(56) Entgegenhaltungen:
- EP-A1- 0 346 802
- EP-A1- 0 570 753
- FR-A- 1 545 123
- JP-A- 11 181 832
- NL-A- 6 919 162
- US-A1- 2006 034 661
- US-A1- 2006 202 514

## Beschreibung

Die Erfindung betrifft eine selbstfahrende Baumaschine, insbesondere Straßenfräsmaschine, Recycler oder einen Stabilisierer nach dem Oberbegriff des Anspruchs 1.

Derartige Straßenfräsmaschinen sind beispielsweise aus der WO02/01005 bekannt. Eine derartige Straßenfräsmaschine weist einen von einem Fahrwerk getragenen Maschinenrahmen auf und hat im Wesentlichen vertikal verlaufende seitliche Außenwände. In dem Maschinenrahmen ist eine Fräswalze zum Bearbeiten einer Boden- oder Verkehrsfläche gelagert. Die Straßenfräsmaschine ist des weiteren mit einem Fahrstand mit einem Bedien- und Anzeigepult sowie einem Sitz für den Fahrzeugführer versehen. Ein Stabilisierer ist aus der DE 103 57 074 bekannt.

Ein gattungsgemäßer Stand der Technik, bei dem der Fahrerstand quer zur Fahrtrichtung verfahrbar ist, ist aus der WO 96/24725 bekannt.

Bei Rückwärtsfahrt muss sich der Fahrzeugführer umdrehen. Der Sitz des Fahrzeugführers ist vorzugsweise auf der sogenannten Nullseite der Straßenfräsmaschine angeordnet, an der die Fräswalze mit ihrer Stirnseite am nächsten entlang eines Hindernisses, z.B. einer Bordsteinkante oder einer Leitplanke, vorbeigeführt werden kann.

Auf der der Nullseite gegenüberliegenden Seite kann die Stirnseite der Fräswalze aufgrund der Antriebseinrichtung nicht so nah an einem Hindernis vorbeigeführt werden.

Der Fahrzeugführer kann von seinem auf der Nullseite angeordnetem Sitz aus die der Nullseite gegenüberliegende Außenkante der Maschine mit Hilfe von Außenspiegeln beobachten.

Aufgrund der eingeschränkten Sicht und Beobachtungsmöglichkeiten ist der Fahrzeugführer auf einen begleitenden Helfer angewiesen, der ihn insbesondere im Rangierbetrieb und im Fräsbetrieb unterstützt. Insbesondere im Fräsbetrieb ergeben sich dann allerdings sehr lange Zeitperioden, in denen der Helfer nicht beschäftigt ist.

Der Erfindung liegt daher die Aufgabe zugrunde eine Baumaschine der eingangs genannten Art derart weiterzubilden, dass die Sichtverhältnisse für den Fahrzeugführer verbessert werden, so dass der Betrieb einer Baumaschine sowohl im Rangierbetrieb als auch im Arbeitsbetrieb ohne weitere Hilfspersonen möglich ist.

Zur Lösung dieser Aufgabe dienen die Merkmale des Anspruchs 1.

Die Erfindung sieht in vorteilhafter Weise vor, dass der Fahrerstand quer zur Fahrtrichtung verfahrbar ist, und dass der Sitz für den Fahrzeugführer in den Fahrerstand integriert ist, der über die seitlichen Außenwände des Maschinenrahmens hinaus nach Außen verfahrbar ist, wobei der Maschinenrahmen eine quer zur Fahrtrichtung wirkende Führung für den Fahrerstand aufweist und die Führung nicht oder nur geringfügig über die seitlichen Außenwände übersteht. Der Fahrerstand ist nur teilweise über die seitlichen Außenwände hinaus verfahrbar, wobei es genügt, dass der Fahrzeugführer in dem Fahrerstand die seitliche Außenwand und den Bereich neben der Außenwand beobachten kann.

Nach der Erfindung kann der Fahrzeugführer mit seinem Sitz über die seitlichen Außenwände hinaus auf beiden Seiten der Baumaschine herausfahren, so dass er die Außenseiten der Maschine im Rangier- und Fräsbetrieb optimal beobachten kann. Auch im Falle eines Hindernisses z.B. einer Straßenlaterne kann der Fahrzeugführer seinen Fahrerstand kurzfristig nach innen verschieben, bis die Baumaschine das Hindernis passiert hat.

Der Fahrerstand ist erfindungsgemäß zumindest in den äußeren Endpositionen der mindestens einen Führung jenseits der seitlichen Außenwände um eine vertikale Achse schwenkbar.

Auf diese Weise kann der Fahrzeugführer in eine für die Beobachtung des Rangier- und Fräsbetriebs der Maschine optimale Position gebracht werden.

Vorzugsweise ist das Bedien- und Anzeigepult in den verfahrbaren Fahrerstand integriert. Auf diese Weise muss der Fahrzeugführer seinen Sitz zum Bedienen der Maschine, oder zum Ablesen von Anzeigeinstrumenten nicht verlassen.

Nach einer vorteilhaften Weiterbildung ist vorgesehen, dass eine an den verfahrbaren Fahrerstand befestigte Säule das Bedien- und Anzeigepult in einem einstellbaren Abstand von dem Fahrzeugführer trägt. Auf diese Weise kann das Bedien- und Anzeigepult ergonomisch an den jeweiligen Fahrzeugführer angepasst werden.

Nach einem bevorzugten Ausführungsbeispiel ist die Höhe der Sitzfläche des Sitzes oder die Höhe der Standfläche im Fahrerstand derart einstellbar, dass die Augenhöhe im Sitzen im Wesentlichen der Augenhöhe des Fahrzeugführers im Stehen entspricht. Auf diese Weise ist gewährleistet, dass der Fahrzeugführer auch im Sitzen die gleiche Übersicht über das Fahrzeug - wie im Stehen - besitzt.

Der Sitz weist Armlehnen auf, wobei Bedienelemente für die Maschinensteuerung in Verlängerung einer Armlehne des Sitzes angeordnet sein können.

Der Fahrerstand ist vorzugsweise von einer Wetterschutzeinrichtung umgeben, die gemeinsam mit dem Fahrerstand verfahrbar ist.

Dabei kann die Wetterschutzeinrichtung aus einer Kabine bestehen.

Die Kabine ist zum Transport vorzugsweise zusammenfaltbar oder versenkbar oder umklappbar, damit die maximale Transportabmessung der Straßenfräsmaschine bei einem Transport auf einem Tieflader für Brückenunterführungen gering gehalten werden kann. Die Kabine ist beispielsweise um eine parallel zur Fahrtrichtung verlaufende Achse umklappbar, wenn ihre Breite quer zur Fahrtrichtung erheblich schmaler als ihre Höhe ist.

Das Bedien- und Anzeigepult weist Steuerungs-, Bedien- und Anzeigelemente für den Fahr- und Rangierbetrieb, den Fräsbetrieb und die Überwachung des Fräsbetriebes auf.

An den seitlichen Außenwänden können Aufstiegshilfen für den Fahrzeugführer angeordnet sein, die zur Verringerung des Mindestabstandes der Straßenfräsmaschine von Hindernissen automatisch in eine Position verschwenkbar sind, in der sie eng an der Außenwand anliegen. Diese Aufstiegshilfen, z.B. Leitern mit Geländern, können elektrisch oder hydraulisch fernbedienbar ohne manuelle Betätigung oder Hilfestellung durch Hilfspersonen an die Außenwand der Straßenfräsmaschine angelegt werden, so dass die Straßenfräsmaschine insbesondere auf der Nullseite möglichst nah an Hindernisse herangeführt werden kann.

Des weiteren können schwenkbare Spiegel vorgesehen sein, die zur Verringerung des Mindestabstandes der Straßenfräsmaschine von Hindernissen automatisch in eine Position schwenkbar sind, in der sie nicht oder nur geringfügig über die Außenwand seitlich überstehen.

Der Fahrerstand kann eine vertikale Schwenkachse aufweisen, die zwischen dem Sitz und dem Bedien- und Anzeigepult, vorzugsweise mittig zwischen dem Sitz und dem Bedien- und Anzeigepult verläuft. Auf diese Weise führt der Sitz des Fahrzeugführers eine Schwenkbewegung um diese vorzugsweise orthogonal zu dem Maschinenrahmen verlaufende vertikale Schwenkachse aus.

Der Sitz des Fahrzeugführers kann auch mit dem Fahrerstand oder unabhängig von dem Fahrerstand drehbar sein, so dass auch der Rückfahrbetrieb für den Fahrzeugführer erleichtert ist. Vorzugsweise ist ein Drehwinkel von 180° ausreichend, wobei auch ein größerer Drehwinkel vorteilhaft sein kann.

Vorzugsweise ist die Schwenkbewegung um die vertikale Schwenkachse des Fahrerstandes erst in den äußeren Endpositionen der Sitzeinheit an den Enden der Schienenführung freigegeben.

Dabei kann vorgesehen sein, dass der Sitz für den Fahrzeugführer in den äußeren Endpositionen des Fahrerstandes an den Enden der Schienenführung automatisch nach außen verschwenkbar ist. Dies bedeutet, dass der Fahrzeugführer keine Bedien- oder Steuerelemente betätigen muss, um in eine optimale Sitzposition zur Beobachtung der zu bearbeitenden Straßenoberfläche, des Lenkeinschlags, eines Peilstabes und der Markierungen auf der Straßenoberfläche zu gelangen.

Der Sitz oder der Fahrerstand und/oder die Kabine können für den Fahr- und Rangierbetrieb in eine angehobene Position anhebbar sein.

Der Fahrerstand kann insbesondere im Falle eines Recyclers oder Stabilisierers in Fahrtrichtung vor dem Maschinenrahmen und/oder dem Fahrwerk angeordnet sein.

Der Fahrerstand kann an einem Schwenkrahmen des Maschinenrahmens verfahrbar befestigt sein und mit Hilfe des Schwenkrahmens anhebbar und absenkbar sein. In diesem Fall ist die quer zur Fahrtrichtung verlaufende Führung für den Fahrerstand an dem Schwenkrahmen des Maschinenrahmens angeordnet.

Der Schwenkrahmen ist vorzugsweise parallelogrammartig an dem Maschinenrahmen angelenkt, so dass der Fahrerstand bzw. die Kabine beim Anheben oder Absenken parallel verschoben wird.

Eine Steuerung gleicht im Betrieb automatisch eine Quer- und/oder Längsneigung des Maschinenrahmens derart aus, dass der Fahrerstand im wesentlichen in der Horizontalen verbleibt.

Vorzugsweise ist vorgesehen, dass der Schwenkrahmen derartig gegenüber dem Fahrerstand in Höhenrichtung und/oder quer zur Fahrtrichtung übersteht, dass er einen Überrollschutz bildet.

Im Folgenden werden unter Bezugnahme auf die Zeichnungen Ausführungsbeispiele der Erfindung näher erläutert. Es zeigen:
- Fig. 1: eine Straßenfräsmaschine,
- Fig. 2: eine Draufsicht auf die Straßenfräsmaschine der Fig. 1,
- Fig. 3: eine weitere Draufsicht auf die Straßenfräsmaschine der Fig. 1,

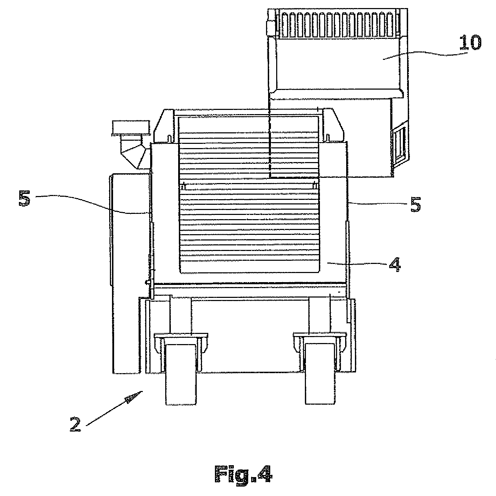

- Fig. 4: eine Rückansicht der Straßenfräsmaschine der Fig. 1,

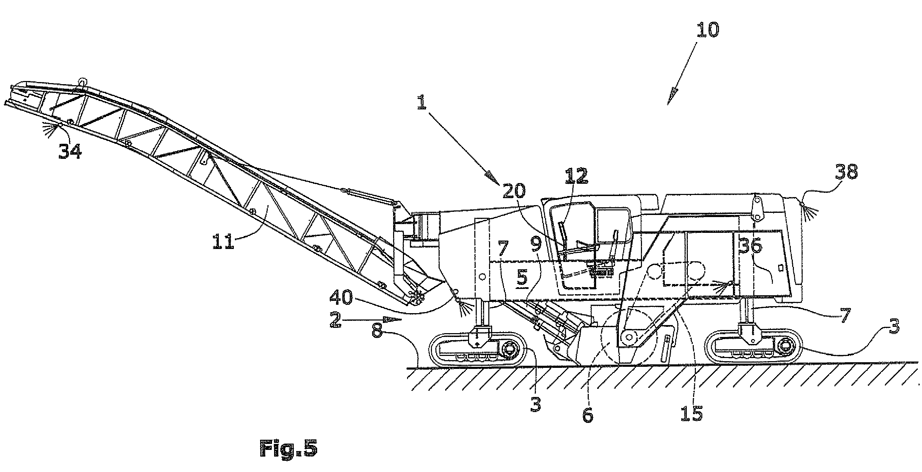

- Fig. 5: eine Seitenansicht der Straßenfräsmaschine, bei der die Kabine des Fahrstandes in Transportstellung ist,

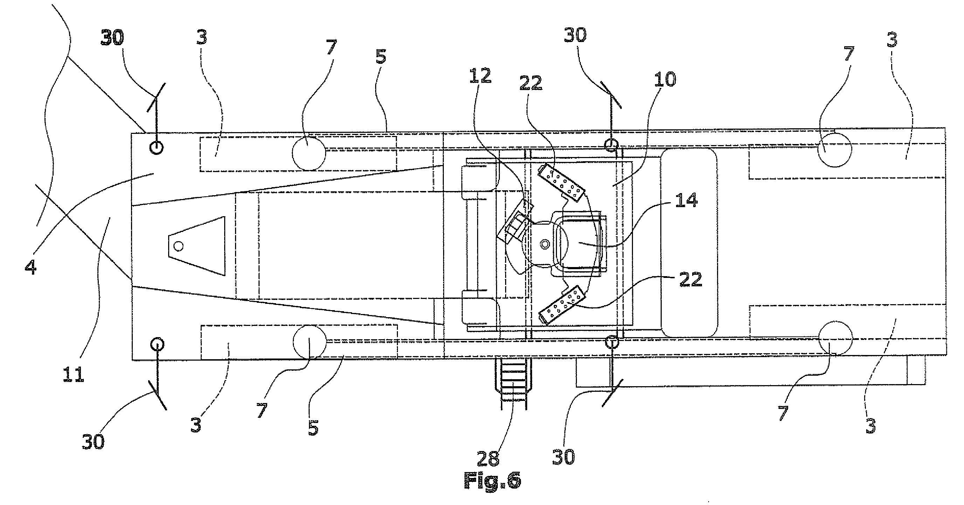

- Fig. 6: eine Draufsicht auf die Straßenfräsmaschine gemäß Fig. 5, bei der sich die Kabine in Transportstellung befindet,
- Fign. 7 und 8: eine perspektivische Ansicht eines Stabilisierers, und
- Fign. 9 und 10: einen Schwenkrahmen des Maschinenrahmens des Stabilisierers gemäß Fign. 7 und 8.

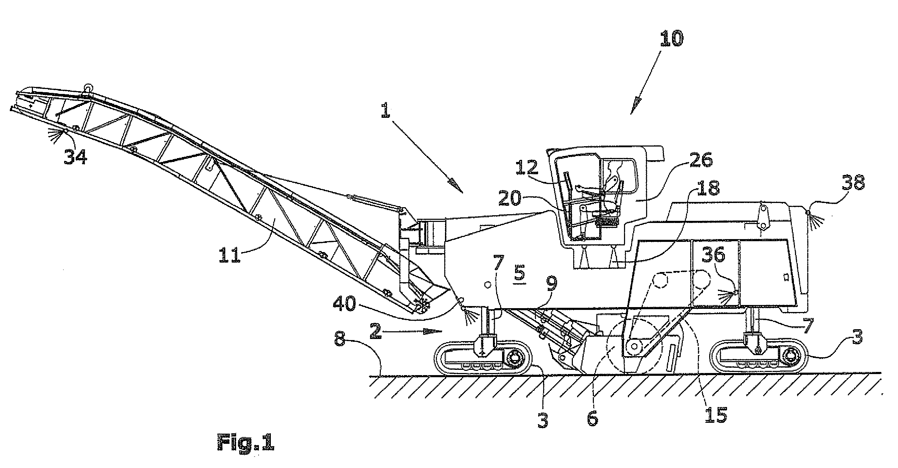

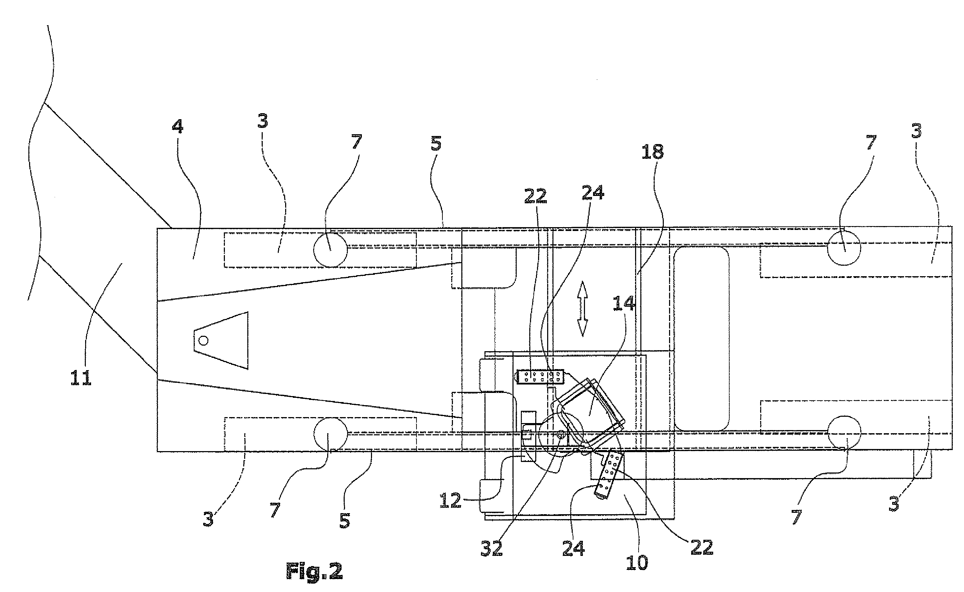

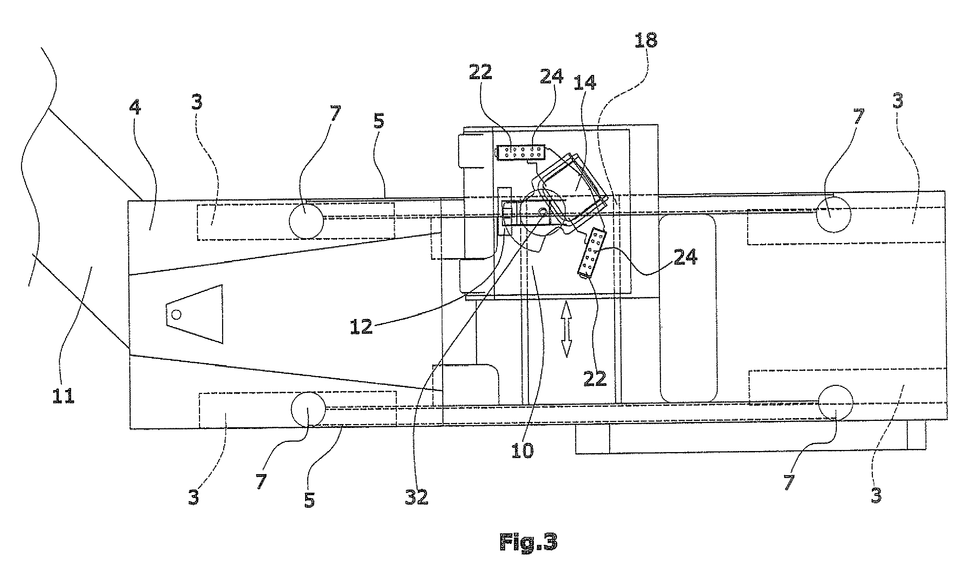

Fig. 1 zeigt eine Straßenfräsmaschine 1 zum Fräsen von Boden- oder Verkehrsflächen 8 in der Ausführungsform einer Frontladerstraßenfräse. Die Straßenfräsmaschine 1 weist ein Fahrwerk 2 auf mit beispielsweise vier Kettenlaufwerken 3, das dem Maschinenrahmen 4 der Straßenfräsmaschine 1 trägt. Es versteht sich, dass die Kettenlaufwerke 3 durch Räderlaufwerke ganz oder teilweise substituiert werden können. In dem Maschinenrahmen 4 ist eine Fräswalze 6 gelagert, die sich quer zur Fahrtrichtung erstreckt. Die Einstellung der Frästiefe erfolgt vorzugsweise mit Hilfe der Höhenverstellung der Kettenlaufwerke 3 über Hubsäulen 7. Die in Fig. 1 dargestellte Straßenfräsmaschine 1 wird auch als FrontladerStraßenfräse bezeichnet, da sie das abgefräste Material in Fahrtrichtung nach vorne auf ein Transportfahrzeug befördern kann. In Fahrtrichtung vor der Fräswalze 6 ist eine erste, aus einem Transportband bestehende Transporteinrichtung 9 angeordnet, die das abgefräste Material vorzugsweise zu einer zweiten, aus einem Transportband bestehende Transporteinrichtung 11 überträgt. Es versteht sich, dass die Straßenfräsmaschine 1 auch nur ein einziges Transportband aufweisen kann. Der Maschinenrahmen 4 weist im wesentlichen vertikal verlaufende seitliche Außenwände 5 auf. Auf der Oberseite des Maschinenrahmens ist ein Fahrerstand 10 mit einem Bedien- und Anzeigepult 12 und einem Sitz 14 für den Fahrzeugführer angeordnet. Der Sitz 14 und das Bedien- und Anzeigepult 12 sind in dem quer zur Fahrtrichtung verfahrbaren Fahrstand 10 integriert. Der Fahrerstand 10 kann auf einer mit dem Maschinenrahmen 4 verbundenen Führung 18, vorzugsweise eine Schienenführung, über die seitlichen Außenwände 5 des Maschinenrahmens 4 hinaus nach außen verfahren werden. Die Schienenführung 18 steht vorzugsweise nicht über die Außenwände 5 seitlich über, wobei gleichwohl der Fahrerstand 10, wie am besten aus den Fign. 2 und 3 ersichtlich, nahezu bis zu seiner Mitte über die seitlichen Außenwände 5 hinaus verfahrbar ist.

Die Führung 18 kann in einer horizontalen Ebene im wesentlichen quer zur Fahrtrichtung linear oder leicht bogenförmig verlaufen oder aus einer Parallelführung bestehen, bei der der Fahrerstand parallel verschoben wird.

Der Sitz 14 für den Fahrzeugführer ist drehbar. Dabei ist vorzugsweise vorgesehen, dass der Sitz 14 gemeinsam mit einem Bedien- und Anzeigepult 12 um eine vertikale Achse 32 innerhalb des Fahrerstandes 10 schwenkbar ist.

Das in dem verfahrbaren Fahrerstand 10 integrierte Bedien- und Anzeigepult 12 ist hierzu an einer Säule 20 in einem einstellbaren Abstand von dem Fahrzeugführer befestigt und ist um die vertikale Achse 32 mit dem Sitz 14 oder unabhängig von diesem verschwenkbar.

Der Sitz 14 kann hinsichtlich seiner Sitzfläche derart höhenverstellbar sein, dass die Augenhöhe des Fahrzeugführers im Sitzen im wesentlichen der Augenhöhe im Stehen innerhalb des Fahrerstandes 10 entspricht.

Der Sitz 14 kann Armlehnen 22 aufweisen, die mit den Bedienelementen 24 für die Maschinensteuerung versehen sind.

Der Fahrerstand 10 ist von einer Kabine 26 als Wetterschutzeinrichtung umgeben. In der mittleren Stellung der Kabine 26 zwischen den Außenwänden 5 ist die Kabine relativ zu dem Maschinenrahmen 4 absenkbar, derart, dass die Oberkante der Kabine 26 mit den vor und hinter der Kabine 26 angeordneten, am Maschinenrahmen 4 befestigten Maschinenelementen bündig abschließt. Dadurch befindet sich die Kabine 26 in einer Transportstellung, um die Aufbauhöhe bei einem Transport der Straßenfräsmaschine 1 auf einem Tieflader gering zu halten.

Alternativ kann die Kabine zusammenfaltbar sein oder um eine horizontale, parallel zur Fahrtrichtung verlaufende Achse schwenkbar sein, wenn die Kabine 26 im Vergleich zu ihrer Höhe schmal ist.

An den seitlichen Außenwänden 5 können Aufstiegshilfen 28 in Form von Leitern mit Handläufen angeordnet sein, die, wenn sich der Fahrzeugführer in dem Fahrerstand 10 befindet, mit Hilfe von Antrieben in Richtung auf die Außenwand 5 verschwenkt werden können, so dass diese möglichst flach an der Außenwand 5 anliegen. Die Aufstiegshilfen sind vorzugsweise auf der der Nullseite der Straßenfräsmaschine 1 entgegengesetzten Seite angeordnet, an der auch der Riementrieb 15 für die Fräswalze 6 angeordnet ist.

Es versteht sich allerdings, dass die Aufstiegshilfen auch auf der Nullseite der Straßenfräsmaschine 1 angeordnet sein können. Die Nullseite der Maschine ist diejenige Seite, auf der die Stirnseite der Fräswalze 6 sehr nah an der Außenwand 5 endet und auf der sich nicht der Riementrieb 15 befindet, so dass auf der Nullseite der Maschine ein kantennahes oder hindernisnahes Fräsen möglich ist.

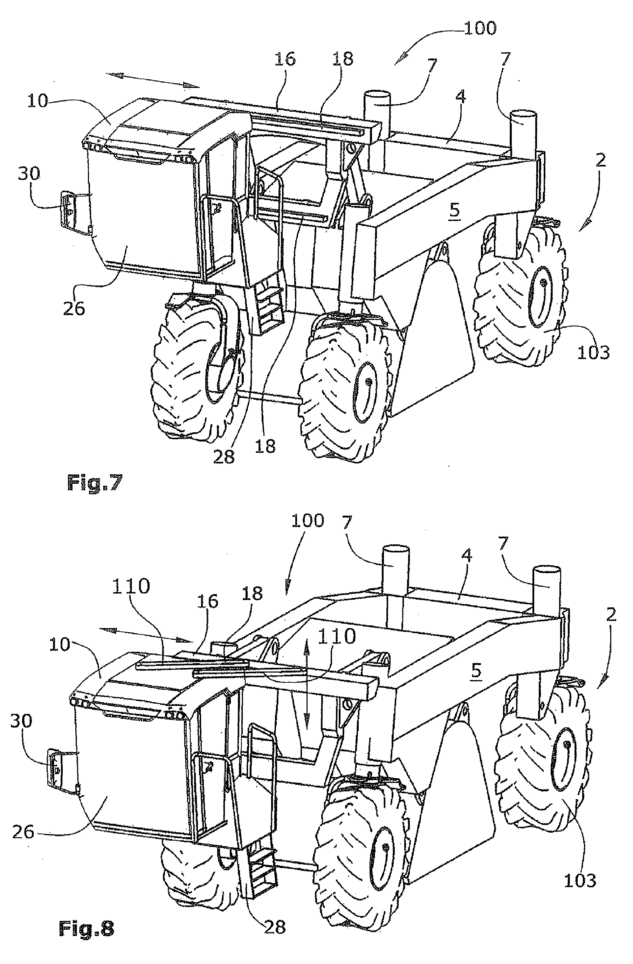

Die Fign. 7 bis 10 zeigen einen Bodenstabilisierer/Recycler 100. Der Maschinenrahmen 4 kann über Hubsäulen von einem Fahrwerk 2 getragen werden, das vorzugsweise Räder 103 aufweist. Der Fahrerstand 10 befindet sich bei einer derartigen Baumaschine vor dem Maschinenrahmen 4 und auch vor dem Fahrwerk 2. In den Fign. 7 und 8 ist der von einer Kabine 26 umgebene Fahrerstand 10 ersichtlich, der über einen Schwenkrahmen 16 des Maschinenrahmens 4 mit dem Maschinenrahmen 4 verbunden ist. Der in Fahrtrichtung vordere Teil des Schwenkrahmens 16 bildet dabei zugleich die Führung 18 für die quer zur Fahrtrichtung verfahrbare Kabine 26.

An der Kabine 26 kann eine Aufstiegshilfe 28 befestigt sein.

Die Fig. 7 zeigt den Schwenkrahmen 16 des Maschinenrahmens 4, der über Lenker 102,104 parallelogrammartig mit dem Maschinenrahmen 4 verbunden ist.

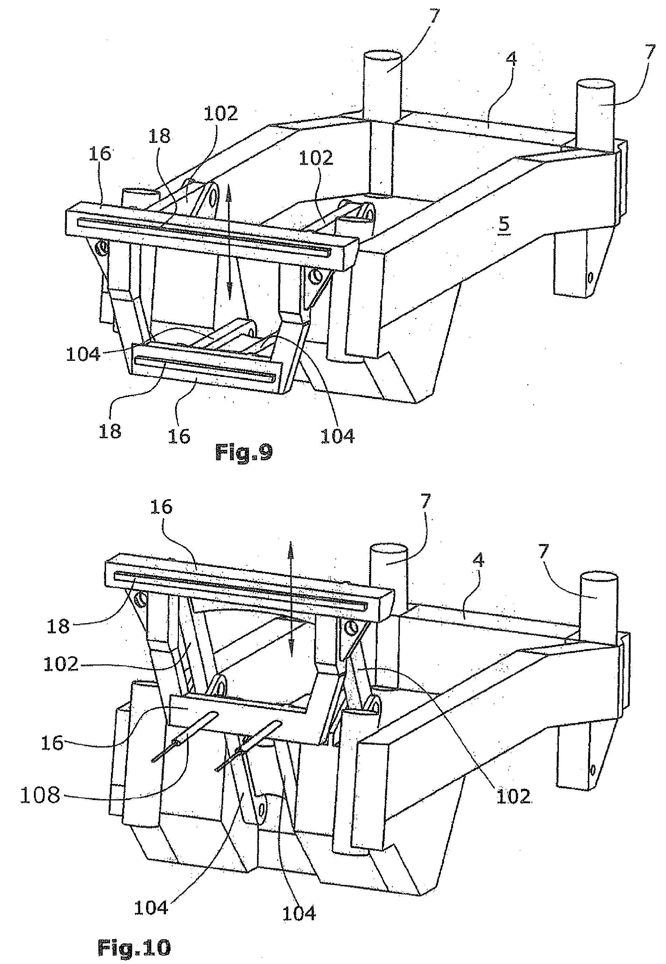

Aufgrund der parallelogrammartigen Anlenkung des Schwenkrahmens 16 ist es möglich, den Fahrerstand 10 von einer unteren Position zu einer oberen Position und zurück parallel zu verschieben, ohne dass die Neigung der Kabine 26 zu einer vertikalen, quer zur Fahrtrichtung verlaufenden Ebene verändert wird. Die Neigung kann aber auch durch geeignete Gestaltung der parallelogrammartigen Anlenkung oder durch Zusatzeinrichtungen 108 in Längsneigung und/oder Querneigung einstellbar sein (Fig. 10).

Auf dem Schwenkrahmen 16 können bodenparallele, lineare oder in einer Horizontalebene bogenförmig verlaufende Führungen 18 an den oberen und/oder unteren Querbalken des Schwenkarms 16 vorgesehen sein, die ein seitliches Verschieben des Fahrerstandes 10 quer zur Fahrtrichtung ermöglichen. Die Fig. 7 zeigt eine maximale Außenposition des Fahrerstandes 10, bei der die angehobene Kabine 26 gegenüber der einen seitlichen Außenwand 5 übersteht.

Fig. 8 zeigt eine alternative Führung 18 mit parallelogrammartig angeordneten Lenkern 110 und einer abgesenkten Kabine 26.

Der obere Querbalken des Schwenkrahmens 16 erstreckt sich über die gesamte Breite des Maschinenrahmens 4 und kann auch in Höhenrichtung über das Dach der Kabine 26 nach oben überstehen.

Der Schwenkrahmen 16 kann als Überrollschutz dienen (Roll Over Protective Structure, ROPS).

An den Außenseiten der Baumaschinen, insbesondere an den Außenwänden 5 können mehrere schwenkbare Spiegel 32 angeordnet sein, die mit Hilfe von Antriebseinrichtungen von dem Fahrzeugführer bedient werden können, so dass keine zusätzlichen Personen für diese Tätigkeiten notwendig sind.

Die Kabine 26 kann für den Rangierbetrieb oder den Arbeitsbetrieb in eine besonders angehobene Position verfahren werden.

Schließlich sind an mehreren Stellen der Baumaschine 1 Videoüberwachungseinrichtungen angeordnet. Am vorderen Ende der Transporteinrichtung 11 der in Fig. 2 gezeigten Baumaschine 1 befindet sich eine Videokamera 34 zum Überwachen des Materialauswurfs von dem vorderen Transportband 11 auf ein Transportmittel, z.B. einen Lastkraftwagen.

Am hinteren Ende der Baumaschine 1 kann eine Videokamera 38 zum Überwachen des rückwärtigen Bereichs vorgesehen sein. An den Außenwänden 5 können Videokameras 36 angeordnet sein, die die Beobachtung der linken bzw. rechten Maschinenseite in Vorwärtsrichtung längs den Außenwänden 5 erlauben. An der Unterseite des Maschinenrahmens 4 kann am vorderen Ende des Maschinenrahmens 4 eine Videokamera 40 angeordnet sein, die den Bereich vor der Fräswalze 6 der Baumaschine beobachten kann.

Im Resultat können die beschriebenen Baumaschinen von einem Fahrzeugführer ohne Hilfsperson bedient werden, da der Fahrzeugführer alle Maschinenfunktionen ausüben kann, ohne auf die Hilfe einer Hilfsperson angewiesen zu sein und ohne den Fahrerstand 10 verlassen zu müssen. Aufgrund der Videoüberwachung mit Hilfe der Videokameras 34 bis 40 und der Anzeige der Bilder auf dem Bedien- und Anzeigepult 12 kann auch der Materialtransport auf einen LKW im Falle einer Straßenfräsmaschine und der Rangierbetrieb beim Auffahren der Baumaschine 1 auf einen Tieflader von dem Fahrzeugführer ohne Hilfsperson durchgeführt werden.

## Patentansprüche

1. Straßenfräsmaschine (1), Recycler (100) oder Stabilisierer, mit
- einem von einem Fahrwerk (2) mit vier Kettenlaufwerken (3) oder Räderlaufwerken getragenen Maschinenrahmen (4) mit vorzugsweise vertikal verlaufenden seitlichen Außenwänden (5),
- einer in dem Maschinenrahmen (4) gelagerten quer zur Fahrtrichtung zwischen den Kettenlaufwerken (3) oder Räderlaufwerken der Vorder- und Hinterachse sich erstreckende Fräswalze (6) zum Bearbeiten einer Boden- oder Verkehrsfläche (8), und
- mit einem Fahrerstand (10) mit einem Bedien- und Anzeigepult (12) und einem Sitz (14) für einen Fahrzeugführer, der in den Fahrerstand (10) integriert ist,
wobei der Fahrerstand quer zur Fahrtrichtung auf dem Maschinenrahmen (4) verfahrbar ist, und der Maschinenrahmen (4) eine quer zur Fahrtrichtung wirkende Führung (18) für den Fahrerstand (10) aufweist,
**dadurch gekennzeichnet,**
**dass** der Fahrerstand (10) über die seitlichen Außenwände (5) des Maschinenrahmens (4) hinaus auf beiden Seiten nach außen verfahrbar ist,
**dass** die Führung (18) nicht oder nur geringfügig über die Außenwände (5) seitlich übersteht, und
**dass** der Fahrerstand (10) zumindest in den äußeren Positionen um eine vertikale Achse (32) schwenkbar ist.

2. Baumaschine nach Anspruch 1, **dadurch gekennzeichnet, dass** an den seitlichen Außenwänden (5) Aufstiegshilfen (28) für den Fahrzeugführer angeordnet sind, die zur Verringerung des Mindestabstandes der Maschine von Hindernissen automatisch in eine Position schwenkbar sind, in der sie eng an der Außenwand (5) anliegen.

3. Baumaschine nach einem der Ansprüche 1 oder 2, **dadurch gekennzeichnet, dass** schwenkbare Spiegel (30) vorgesehen sind, die im Falle einer Vorbeifahrt längs von seitlichen Hindernissen zur Verringerung des Mindestabstandes der Maschine von Hindernissen automatisch in eine Position schwenkbar sind, in der sie nicht oder nur geringfügig über die Außenwand (5) seitlich überstehen.

4. Baumaschine nach einem der Ansprüche 1 bis 3, **dadurch gekennzeichnet, dass** die vertikale Schwenkachse (32) des Fahrerstandes (10) zwischen dem Sitz (14) und dem Bedien- und Anzeigepult (12), vorzugsweise mittig zwischen dem Sitz (14) und dem Bedien- und Anzeigepult (12) verläuft.

5. Baumaschine nach einem der Ansprüche 1 bis 4, **dadurch gekennzeichnet, dass** der Sitz (14) innerhalb des Fahrerstandes (10) und unabhängig von dem Fahrerstand (10) drehbar ist.

6. Baumaschine nach Anspruch 5, **dadurch gekennzeichnet, dass** die Schwenkbewegung um die vertikale Schwenkachse (32) des Fahrerstandes (10) erst in den äußeren Endpositionen des Fahrerstandes (10) an den Enden der Schienenführung (18) freigegeben ist.

7. Baumaschine nach Anspruch 5 oder 6, **dadurch gekennzeichnet, dass** der Sitz (14) für den Fahrzeugführer in den äußeren Endpositionen des Fahrerstandes (10) an den Enden der Schienenführung (18) automatisch nach außen verschwenkbar ist.

8. Baumaschine nach einem der Ansprüche 1 bis 7, **dadurch gekennzeichnet, dass** der Fahrerstand (10) von einer Wetterschutzeinrichtung umgeben ist, die aus einer Kabine besteht, und dass die Kabine (26) zum Transport zusammenfaltbar oder absenkbar oder um eine horizontale, parallel zur Fahrtrichtung verlaufende Achse umklappbar ist.

9. Baumaschine nach einem der Ansprüche 1 bis 8, **dadurch gekennzeichnet, dass** Videokameras (34,36,38,40) zum Überwachen des Materialauswurfs von einem vorderen Transportband (11) auf ein Transportmittel, zum Überwachen des Bereichs neben den Außenwänden (5), zum Überwachen des rückwärtigen Bereichs und/oder zum Überwachen des Bereichs vor der Fräswalze (6) vorgesehen sind.

10. Baumaschine nach einem der Ansprüche 1 bis 9, **dadurch gekennzeichnet, dass** der Fahrerstand (10) in Fahrtrichtung vor dem Maschinenrahmen (4) und/oder dem Fahrwerk (2) angeordnet ist, und dass der Fahrerstand (10) an einem relativ zu dem Maschinenrahmen (4) schwenkbaren Rahmen (16) verfahrbar befestigt ist und mit Hilfe des schwenkbaren Rahmens (16) anhebbar und absenkbar ist.

11. Baumaschine nach Anspruch 10, **dadurch gekennzeichnet, dass** die quer zur Fahrtrichtung wirkende Führung (18) für den Fahrerstand (10) an dem schwenkbaren Rahmen (16) des Maschinenrahmens (4) angeordnet ist.

12. Baumaschine nach einem der Ansprüche 10 oder 11, **dadurch gekennzeichnet, dass** der schwenkbare Rahmen (16) zum Anheben oder Absenken parallelogrammartig an dem Maschinenrahmen (4) angelenkt ist.

13. Baumaschine nach einem der Ansprüche 10 bis 12, **dadurch gekennzeichnet, dass** der Fahrerstand (10) durch Zusatzeinrichtungen (108) oder durch geeignete Gestaltung der parallelogrammartigen Anlenkung an dem Maschinenrahmen (4) hinsichtlich Längs- und/oder Querneigung einstellbar ist.

14. Baumaschine nach einem der Ansprüche 10 bis 13, **dadurch gekennzeichnet, dass** der schwenkbare Rahmen (16) derart gegenüber dem Fahrerstand (10) in Höhenrichtung und/oder quer zur Fahrtrichtung übersteht, dass er einen Überrollschutz bildet.

## Claims

1. Road milling machine (1), recycler (100), or stabilizer, with
- a machine frame (4) units having preferably vertically arranged lateral outer walls (5) carried by a chassis (2) with four crawler track units (3) or wheel,
- a milling drum (6) supported in the machine frame (4) for working a ground surface or traffic surface (8), said milling drum extending transversely to the travelling direction between the crawler track units (3) or wheel units of the front and rear axles, and
- an operator's platform (10) with an operating and indicating panel (12) and a seat (14) for a machine driver, which is integrated into the operator's platform (10), wherein the operator's platform is moveable on the machine frame (4) transversely to the direction of travel, and the machine frame (4) is provided with a guide (18) for the operator's platform (10) acting transversely to the direction of travel,
**characterized in**
**that** operator's platform (10) is moveable outwards on either side beyond the lateral outer walls (5) of the machine frame (4),
**that** the guide (18) projects laterally either not at all or just slightly beyond the outer walls (5), and
**that** the operator's platform (10) is mounted to swivel around a vertical axis (32) at least when in the outer positions.

2. Construction machine in accordance with claim 1, **characterized in that** ascending aids (28) for the machine driver are arranged at the lateral outer walls (5), said ascending aids (28) being capable of automatically swivelling into a position in which they rest close to the outer wall (5) for the purpose of reducing the machine's minimum distance from obstacles.

3. Construction machine in accordance with one of the claims 1 or 2, **characterized in that** tilting mirrors (30) are provided which, when travelling along lateral obstacles, are capable of automatically swivelling into a position in which they project laterally either not at all or just slightly beyond the outer wall (5) for the purpose of reducing the machine's minimum distance from obstacles.

4. Construction machine in accordance with one of the claims 1 to 3, **characterized in that** the vertical swivelling axis (32) of the operator's platform (10) runs between the seat (14) and the operating and indicating panel (12), preferably centrally between the seat (14) and the operating and indicating panel (12).

5. Construction machine in accordance with one of the claims 1 to 4, **characterized in that** the seat (14) is capable of swivelling within the operator's platform (10) and independent of the operator's platform (10).

6. Construction machine in accordance with claim 5, **characterized in that** the swivelling movement around the vertical swivelling axis (32) of the operator's platform (10) is released only in the outer end positions of the operator's platform (10) at the ends of the rail guide (18).

7. Construction machine in accordance with claim 5 or 6, **characterized in that** the seat (14) for the machine driver is capable of swivelling outwards automatically in the outer end positions of the operator's platform (10) at the ends of the rail guide (18).

8. Construction machine in accordance with one of the claims 1 to 7, **characterized in that** the operator's platform (10) is enclosed by a weather protection facility consisting of a cabin (26) and that, for the purpose of transport, the cabin (26) is capable of folding down, or lowering, or folding around a horizontal axis running parallel to the direction of travel.

9. Construction machine in accordance with one of the claims 1 to 8, **characterized in that** video cameras (34, 36, 38, 40) are provided for monitoring the discharge of material from a front transport conveyor (11) onto a means of transport, for monitoring the area next to the outer walls (5), for monitoring the rearward area, and/or for monitoring the area in front of the milling drum (6).

10. Construction machine in accordance with one of the claims 1 to 9, **characterized in that** the operator's platform (10) is arranged in front of the machine frame (4) and/or the chassis (2) when seen in the direction of travel, and that the operator's platform (10) is attached in a moveable manner at a swivel frame (16) swivelling relative to the machine frame (4), and is capable of being raised and lowered by means of the swivel frame (16).

11. Construction machine in accordance with claim 10, **characterized in that** the guide (18) for the operator's platform (10), which acts transversely to the direction of travel, is arranged at the swivel frame (16) of the machine frame (4).

12. Construction machine in accordance with one of the claims 10 or 11, **characterized in that** the swivel frame (16) is articulated at the machine frame (4) in a parallelogram-type manner for the purpose of raising or lowering.

13. Construction machine in accordance with one of the claims 10 to 12, **characterized in that** the operator's platform (10) is adjustable with regard to longitudinal and/or transverse inclination by means of additional devoices (108) or a suitable design of the parallelogram-type articulation at the machine frame (4).

14. Construction machine in accordance with one of the claims 10 to 13, **characterized in that** the swivel frame (16) projects vis-à-vis the operator's platform (10) in height direction and/or transversely to the direction of travel in such a manner that it forms a rollover protection.

## Revendications

1. Engin de fraisage routier (1), engin de recyclage (100) ou engin de stabilisation, comprenant
- un châssis (4) qui est supporté par un mécanisme de roulement (2) équipé de quatre trains de roulement à chenilles (3) ou trains de roulement à roues et qui comporte de préférence des parois extérieures latérales (5) s'étendant verticalement,
- un tambour de fraisage (6) qui est monté dans le châssis (4), qui s'étend transversalement à la direction de roulement entre les trains de roulement à chenilles (3) ou les trains de roulement à roues des essieux avant et arrière et qui est destiné à usiner la surface (8) du sol ou de la chaussée, et
- un poste de conducteur (10) équipé d'un pupitre de commande et d'affichage (12) et d'un siège (14) destiné à un conducteur de l'engin et intégré dans le poste de conducteur (10),
le poste de conducteur étant mobile transversalement à la direction de roulement sur le châssis (4), et le châssis (4) comportant un dispositif de guidage (18) agissant transversalement à la direction de roulement et destiné au poste de conducteur (10),
**caractérisé en ce que**
le poste de conducteur (10) est mobile de part et d'autre vers l'extérieur au-delà des parois extérieures latérales (5) du châssis (4),
le dispositif de guidage (18) ne se projette pas, ou que légèrement, latéralement au-delà de la paroi extérieure (5), et
le poste de conducteur (10) peut pivoter au moins dans les positions extérieures autour d'un axe vertical (32).

2. Engin de construction selon la revendication 1, **caractérisé en ce que** des auxiliaires de montée (28) destinés au conducteur sont disposés au niveau des parois extérieures latérales (5), lesquels auxiliaires de montée peuvent pivoter automatiquement dans une position, dans laquelle ils sont appliqués contre la paroi extérieure (5), pour réduire la distance minimale entre l'engin et des obstacles.

3. Engin de construction selon l'une des revendications 1 ou 2, **caractérisé en ce qu'**il est prévu des miroirs pivotants (30) qui peuvent pivoter automatiquement, lors du passage le long d'obstacles latéraux, dans une position dans laquelle ils ne se projettent pas, ou que légèrement, latéralement au-delà de la paroi extérieure (5), pour réduire la distance minimale entre l'engin et les obstacles.

4. Engin de construction selon l'une des revendications 1 à 3, **caractérisé en ce que** l'axe de pivotement vertical (32) de le poste de conducteur (10) s'étend entre le siège (14) et le pupitre de commande et d'affichage (12), de préférence au milieu entre le siège (14) et le pupitre de commande et d'affichage (12).

5. Engin de construction selon l'une des revendications 1 à 4, **caractérisé en ce que** le siège (14) peut tourner à l'intérieur du poste de conducteur (10) et indépendamment du poste de conducteur (10).

6. Engin de construction selon la revendication 5, **caractérisé en ce que** le mouvement de pivotement sur l'axe de pivotement vertical (32) de la cabine de conducteur (10) n'est libéré que dans les positions d'extrémité extérieures du poste de conducteur (10) aux extrémités du dispositif de guidage sur rail (18).

7. Engin de construction selon la revendication 5 ou 6, **caractérisé en ce que** le siège (14) destiné au conducteur pivote automatiquement vers l'extérieur dans les positions d'extrémité extérieures du poste de conducteur (10) aux extrémités du dispositif de guidage sur rail (18).

8. Engin de construction selon l'une des revendications 1 à 7, **caractérisé en ce que** le poste de conducteur (10) est entouré par un dispositif de protection contre les intempéries qui se compose d'une cabine, et **en ce que** la cabine (26) peut être repliée ou abaissée pour le transport, ou peut être rabattue par rotation sur un axe horizontal parallèle la direction de roulement.

9. Engin de construction selon l'une des revendications 1 à 8, **caractérisé en ce qu'**il est prévu des caméras vidéo (34, 36, 38, 40) destinées à la surveillance de la projection de matériaux depuis une bande transporteuse avant (11) sur un moyen de transport, la surveillance de la zone à côté des parois extérieures (5), la surveillance de la zone arrière et/ou la surveillance de la zone située devant le tambour de fraisage (6).

10. Engin de construction selon l'une des revendications 1 à 9, **caractérisé en ce que** le poste de conducteur (10) est disposé en avant du châssis (4) et/ou du mécanisme de roulement (2) par référence à la direction de roulement, et **en ce que** le poste de conducteur (10) est fixé de façon mobile à un cadre (16) pouvant pivoter par rapport au châssis (4) et peut être soulevé et abaissé à l'aide du cadre pivotant (16).

11. Engin de construction selon la revendication 10, **caractérisé en ce que** le dispositif de guidage (18), qui agit transversalement à la direction de roulement et qui est destiné au poste de conducteur (10), est disposé sur le cadre pivotant (16) du châssis (4).

12. Engin de construction selon l'une des revendications 10 ou 11, **caractérisé en ce que** le cadre pivotant (16) est monté sur le châssis (4) par le biais d'une articulation de type parallélogramme pour effectuer des mouvements de soulèvement ou d'abaissement.

13. Engin de construction selon l'une des revendications 10 à 12, **caractérisé en ce que** le poste de conducteur (10) est réglable quant à l'inclinaison longitudinale et/ou transversale par des moyens supplémentaires (108) ou par une conception appropriée de l'articulation de type parallélogramme au niveau du châssis (4).

14. Engin de construction selon l'une des revendications 10 à 13, **caractérisé en ce que** le cadre pivotant (16) se projettent en hauteur et/ou transversalement à la direction de roulement par rapport au poste de conducteur (10) de façon à former une protection contre les tonneaux.
